**Europäisches Patentamt**

**European Patent Office**

**Office européen des brevets**

(11) Veröffentlichungsnummer: **0 140 043**

**A2**

## (12) EUROPÄISCHE PATENTANMELDUNG

(21) Anmeldenummer: **84110523.2**

(22) Anmeldetag: **04.09.84**

(51) Int. Cl.⁴: **H 04 L 25/49**

(30) Priorität: **07.09.83 DE 3332265**

(43) Veröffentlichungstag der Anmeldung:
·08.05.85 **Patentblatt 85/19**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Pospischil, Reginhard, Dr. Dipl.-Ing.**
**Gabriel-v.-Seidl-Strasse 15**
**D-8032 Gräfelfing(DE)**

(54) **Decodierer für den Zweipegel-HDB3-Code.**

(57) Decoder zur Umformung von für die Übertagung über Lichtwellenleiter in den Zweipegel-HDB3-Code umgeformte digitale Signale in pseudoternäre Signale. Der Decoder enthält neben der Reihenschaltung zweier D-Flipflops ein diesen nachgeschaltetes Gatternetzwerk sowie eine Taktteilerstufe für den mit der doppelten Bitfolgefrequenz auftretenden Eingangstakt.

FIG 1

EP 0 140 043 A2

SIEMENS AKTIENGESELLSCHAFT    Unser Zeichen
Berlin und München               VPA  83 P 1 6 5 3 .E

## Decodierer für den Zweipegel-HDB3-Code

Die Erfindung betrifft einen Decodierer für die Umformung
von im Zweipegel-HDB3-Code vorliegenden digitalen Signalen
in pseudoternäre Signale mit einem eingangsseitigen D-Flipflop und einem nachgeschalteten Gatternetzwerk.

In der CCITT-Empfehlung G.703 sind abhängig von der jeweiligen Hierarchiestufe für die Verbindungsleitungen zwischen
den Geräten von Systemen zur Übertragung digitaler Signale
digitale Schnittstellen mit bestimmten Schnittstellencodes
festgelegt. Für alle aufgeführten Bitraten von 64 kbit/s bis
45 Mbit/s sind dabei pseudoternäre Schnittstellencodes festgelegt worden. Diese Codes mit jeweils drei Amplitudenstufen
sind für eine Übertragung über Lichtwellenleiter nicht sehr
geeignet. Die Übertragung von digitalen Signalen über Lichtwellenleiter erfolgt demgegenüber in der Regel mit einem
zweistufigen Übertragungscode. Meist werden sogenannte binäre Blockcodes mBnB verwendet, bei denen Blöcke mit m binären Zeichen in Blöcke mit einer größeren Anzahl n Zeichen
umgewandelt werden. Zur Rückumwandlung auf der Empfangsseite
ist eine Blocksynchronisation erforderlich, die im allgemeinen nicht für jedes periodische binäre Eingangssignalmuster
möglich ist. Für die Übertragung beliebiger binärer Eingangssignale werden diese vor der sendeseitigen Codeumsetzung verwürfelt und müssen entsprechend auf der Empfangsseite nach der Decodierung entwürfelt werden. Für den Übergang von der Lichtwellenleiterübertragung zur Schnittstelle
besitzt deshalb ein Leitungsendgerät neben einem Empfangsregenerator einen Umformer vom Leitungscode in einen Binärcode, einen Entwürfler und einen weiteren Umwandler vom Bi-

Ah 1 Gru / 30.08.1983

närcode in den für die Schnittstelle vorgeschriebenen
pseudoternären Code.

Aus den Technischen Mitteilungen der PTT 7/1979, Seiten
253 bis 266 ist insbesondere aus Seite 258, Fig. 33 eine
Decoderschaltung bekannt, in der in Verbindung mit einem
Pegelinterface eine Umwandlung vom für die Lichtwellenleiterübertragung verwendeten Zweipegel-HDB3-Code in den pseudoternären HDB3-Code vorgenommen wird. Der genannte Decoder besitzt neben einer Taktrückgewinnungsschaltung ein
eingangsseitiges D-Flipflop und ein weiteres D-Flipflop
mit vorgeschaltetem Laufzeitglied sowie ein nachgeschaltetes Gatternetzwerk. Die Verwendung eines Laufzeitgliedes ist insbesondere bei hohen Übertragungsgeschwindigkeiten problematisch, da bei diesen Geschwindigkeiten die
Laufzeiten in den einzelnen Schaltungsteilen bei der Einstellung des Laufzeitgliedes mit berücksichtigt werden
müssen, so daß derartige Laufzeitglieder in der Regel
eines Abgleiches bedürfen. Zusätzlich können sich Schwierigkeiten hinsichtlich einer monolithischen Integration
ergeben. Die Aufgabe bei der vorliegenden Erfindung bebesteht also darin, ein auch für Übertragungsgeschwindigkeiten von über 100 Mbit pro Sekunde geeignete Decoderschaltung anzugeben, die keines Abgleiches bedarf und die
leicht monolithisch integrierbar ist.

Erfindungsgemäß wird die Aufgabe durch einen Decoder der
eingangs erwähnten Art gelöst, bei dem ein Binäreingang
für die im Zweipegel-Binärcoder vorliegenden umzuformenden Signale vorgesehen ist, daß mit diesem Eingang der
D-Eingang eines ersten D-Flipflop verbunden ist, daß ein
Takteingang vorgesehen ist, an den die Takteingänge des
ersten D-Flipflop, eines zweiten D-Flipflops und einer
Teilerstufe angeschlossen sind, daß der nichtinvertierende Ausgang des ersten D-Flipflops mit einem ersten
Eingang eines ersten UND-Gatters verbunden ist, daß der invertierende Ausgang des ersten D-Flipflops mit dem D-Eingang des zweiten D-Flipflops sowie mit dem ersten Eingang eines zweiten UND-Gatters verbunden ist, daß an den nichtinvertierenden Ausgang des zweiten D-Flipflops der erste Eingang eines ersten NOR-Gatters angeschlossen ist, daß an den invertierenden Ausgang der Teilerstufe zweite Eingänge des ersten UND-Gatters und des ersten NOR-Gatters verbunden sind, daß mit dem nichtinvertierenden Ausgang der Teilerstufe zweite Eingänge des zweiten UND-Gatters und eines zweiten NOR-Gatters verbunden sind, daß ein erster Eingang des zweiten NOR-Gatters mit dem Binäreingang verbunden ist, daß die Ausgänge des ersten UND-Gatters und des ersten NOR-Gatters jeweils getrennt mit Eingängen eines dritten UND-Gatters verbunden sind, daß Ausgänge des zweiten UND-Gatters und des zweiten NOR-Gatters jeweils getrennt mit Eingängen eines vierten UND-Gatters verbunden sind, daß die Ausgänge des dritten und des vierten UND-Gatters jeweils getrennt mit Eingängen einer Subtrahierschaltung verbunden sind, daß der Ausgang der Subtrahierschaltung den Ausgang des Decodierers bildet und daß ein Synchronisiereingang vorgesehen ist, an den ein Rücksetzeingang der Teilerstufe angeschlossen ist. Von besonderem Vorteil ist dabei die Möglichkeit den erfindungsgeäßen Decoder auch zur .Verarbeitung von Signalen zu verwenden, die in einem HDBn-, CHDBn- oder BnZS-Code vorliegen.

Im Hinblick auf die Störsicherheit verbesserte Weiterbildungen des erfindungsgemäßen Decoders sind in den Patentansprüchen 2 bis 4 beschrieben.

Die Erfindung soll im folgenden anhand der Zeichnung näher erläutert werden. In der Zeichnung zeigt

Fig. 1 ein Ausführungsbeispiel des erfindungsgemäßen Decoders und

Fig. 2 ein Impulsdiagramm zum Decoder nach Fig. 1.

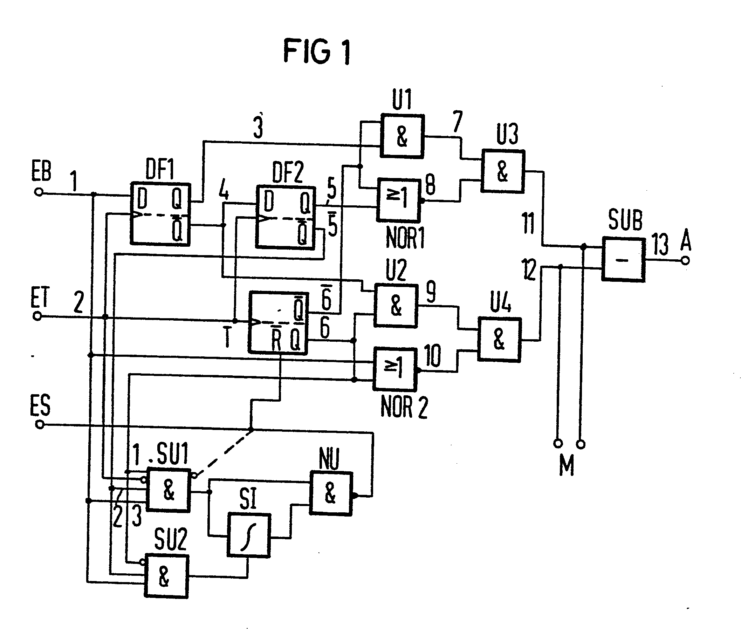

In der Fig. 1 ist mit EB der Eingang bezeichnet, an dem die vom Empfangsregenerator amplituden- und zeitmäßig regenerierten, im Zweipegel-Binärcode vorliegenden Signale aufgenommen werden. Mit diesem Binäreingang EB ist der D-Eingang eines ersten D-Flipflop verbunden, an dessen nichtinvertierenden Ausgang Q der erste Eingang eines ersten UND-Gatters U1 angeschlossen ist. Mit dem invertierenden Ausgang Q̄ des ersten D-Flipflops DF1 sind der D-Eingang eines zweiten D-Flipflops DF2 sowie der erste Eingang eines zweiten UND-Gatters U2 verbunden. Mit dem nichtinvertierenden Ausgang dieses zweiten D-Flipflops DF2 ist der erste Eingang eines ersten NOR-Gatters NOR1 verbunden, dessen Ausgang mit dem zweiten Eingang eines dritten UND-Gatters U3 verbunden ist, während der Ausgang des ersten UND-Gatters U1 mit dem ersten Eingang des dritten UND-Gatters U3 verbunden ist.

Im vorgeschalteten Empfangsregenerator wird für die zeitmäßige Regenerierung der im Zweipegel-HDB3-Code übertragenen digitalen Signale ein Taktsignal benötigt, das dort erzeugt wird und auch über einen Takteingang ET vom Decoder übernommen wird. An den Takteingang ET sind die Takteingänge des ersten und des zweiten D-Flipflops DF1, DF2 und einer Teilerstufe T angeschlossen. An den invertierenden Ausgang Q̄ dieser Teilerstufe mit dem Teilerverhältnis 2:1 sind die zweiten Eingänge des ersten UND-Gatters U1 und des ersten NOR-Gatters NOR1 angeschlossen. Der nichtinvertierende Ausgang Q der Teilerstufe T ist mit den zweiten Eingängen des zweiten UND-Gatters U2 und eines zweiten NOR-Gatters NOR2 verbunden, dessen erster Eingang an den Binäreingang EB angeschlossen ist. Die Ausgänge des zweiten UND-Gatters U2 und des zweiten NOR-Gatters NOR2 sind jeweils getrennt mit Eingängen eines vierten UND-Gatters U4 verbunden. Die Ausgänge des dritten und des vierten UND-Gatters U3, U4 sind jeweils getrennt mit Eingängen eines nachgeschalteten Subtrahierers SUB sowie mit einem Anschluß für einen Monitor M verbunden. Der Ausgang des

**0140043**

Subtrahierers SUB stellt gleichzeitig den Ausgang A des Decodierers dar, an dem die pseudoternären Signale entnehmbar sind.

Für die Decodierung wird ein Takt entsprechend der Schrittfolgefrequenz der pseudoternären Signale benötigt, der durch die Teilerstufe T mit einem Teilerverhältnis von 2:1 aus dem Eingangstakt abgeleitet wird. In der Anfangsphase kann die Teilerstufe in einer von zwei Stellungen sein, so daß sich eine Unsicherheit von 180° in der Phase des erzeugten Taktsignals ergeben kann. Über den Synchronisiereingang ES wird deshalb ein Synchronisiersignal aufgenommen und an einen Setzeingang der Synchronisierstufe T weitergeleitet. Dieses Synchronisiersignal kann von einer vorgeschalteten Überwachungseinrichtung stammen, die bereits eine Kenntnis über die Zeitpunkte der Bitanfänge hat. Für den Fall, daß eine derartige Schaltung und somit auch ein Synchronisiersignal nicht vorhanden ist, ist ein erstes Synchronisier-UND-Gatter SU1 vorgesehen, das einen invertierenden und drei nichtinvertierende Eingänge enthält. Der invertierende Eingang ist an den Takteingang ET angeschlossen, während der erste nichtinvertierende Eingang an den nichtinvertierenden Ausgang Q der Teilerstufe T angeschlossen ist, der zweite nichtinvertierende Eingang mit dem invertierenden Ausgang $\bar{Q}$ des zweiten D-Flipflops DF2 verbunden ist und der dritte nichtinvertierende Eingang an den Binäreingang EB angeschlossen ist. Der Setzeingang der Teilerstufe T ist dann an einen invertierenden Ausgang des UND-Gatters S1 angeschlossen.

Beim Auftreten von Übertragungsfehlern ist es jedoch möglich, daß am Ausgang des UND-Gatters SU1 ein Synchronimpuls zu einem falschen Zeitpunkt auftritt und so zu einer Fehlervervielfachung um etwa den Faktor 2 beiträgt. Im Hinblick darauf ist die Verbindung vom invertierenden Ausgang des UND-Gatters SU1 zum Setzeingang der Teilerstufe T unterbrochen und stattdessen an den nichtinvertierenden Ausgang des ersten Synchronisier-UND-Gatters SU1 der erste Eingang eines Synchronisier-NAND-Gatters NU sowie ein Ein- gang eines Integrators SI angeschlossen. Der Ausgang des Integrators SI ist mit einem weiteren Eingang des Synchronisier-NAND-Gatters NU verbunden, während dessen Ausgang mit dem Setzeingang der Teilerstufe T verbunden ist.

Im Hinblick auf unklare Phasenbeziehungen kann es zweckmässig sein, den Integrator SI zu setzen. Zu diesem Zweck ist der Setzeingang dieses Integrators mit dem Ausgang eines zweiten Synchronisier-UND-Gatters SU2 verbunden, dessen invertierender Eingang mit dem ersten nichtinvertierenden Eingang des ersten Synchronisier-UND-Gatters SU1 verbunden ist, bei dem weiterhin ein erster und ein zweiter nichtinvertierender Eingang des zweiten Synchronisier-Und-Gatters SU4 getrennt mit dem zweiten bzw. dritten nichtinvertierenden Eingang des ersten Synchroniser-UND-Gatters SU1 verbunden sind.

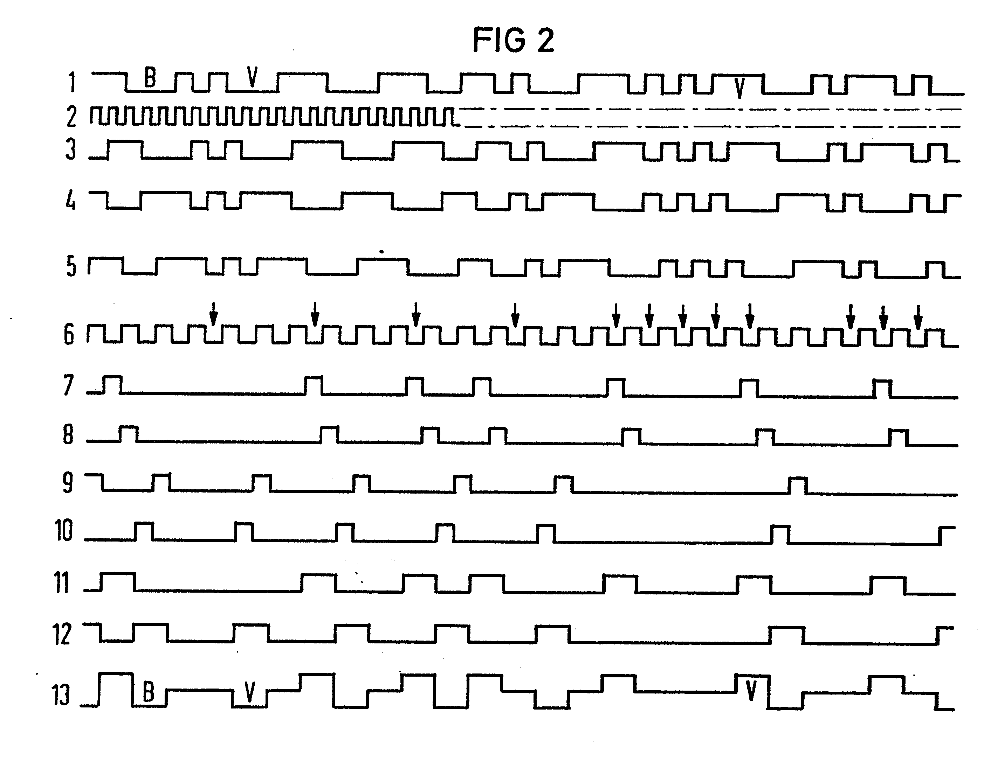

Im Impulsdiagramm nach der Fig. 2 sind die am Binäreingang EB ankommenden digitalen Signale im Zweipegel-HDB3-Code mit 1 bezeichnet und in der obersten Zeile dargestellt. In der Zeile 2 ist der am Takteingang ET ankommende Takt dargestellt, der zum Eingangssignal synchron ist. Das mit dem Takt abgetastete Eingangssignal, das am nichtinvertierenden Ausgang Q des ersten D-Flipflops auftritt, ist in der Zeile 3 dargestellt, in der Zeile 4 ist das entsprechende inverse Ausgangssignal des ersten D-Flipflops gezeigt. Entsprechend ist in Zeile 5 das am nichtinvertierenden Ausgang Q des zweiten D-Flipflops DF2 anstehende Signal dargestellt.

Für die Umcodierung wird ein Takt mit der Schrittfolgefrequenz der Zweipegel-Signale benötigt, der aus dem Eingangstakt mit der doppelten Bitfolgefrequenz mittels der Teilerstufe T abgeleitet wird und der in Zeile 6 dargestellt ist.

0140043

Durch Verknüpfung des Ausgangssignals des ersten D-Flipflops entsprechend Zeile 3 mit dem zur Zeile 6 inversen Taktsignal im ersten UND-Gatter UND1 ergibt sich das Signal entsprechend Zeile 7, in dem die halbbitbreiten Impulse dem positiven 1-Zustand des Eingangssignals nach Zeile 1 entsprechen. In Zeile 8 erscheint dieses Signal um eine halbe Bitdauer verschoben. Die Undverknüpfung der Signale entsprechend Zeilen 7 und 8 führt zum Signal entsprechend Zeile 11, in dem die 1-Zustände des Eingangssignals als vollbitbreite Impulse auftreten. Entsprechend wurden die Signale nach Zeilen 9 und 10 erzeugt, deren Kombination in Zeile 12 dargestellt ist, in dieser Zeile sind die der Bithälftenkombination 00 im Eingangssignal entsprechenden Impulse erzeugt, die den negativen 1-Zustand im pseudoternären Signal entsprechen. Die Differenz der Zeilen 11 und 12, die im Subtrahierer SUB erzeugt wird, führt zum Signal entsprechend Zeile 13, das das pseudoternär codierte digitale Signal darstellt, das erzeugt werden sollte.

5 Patentansprüche
2 Figuren

**0140043**

<u>Patentansprüche</u>

1. Decoder für die Umformung von im Zweipegel-HDB3-Code vorliegenden digitalen Signalen in pseudoternäre Signale mit einem eingangsseitigen D-Flipflop und einem nachgeschalteten Gatternetzwerk, d a d u r c h   g e k e n n z e i c h n e t, daß ein Binäreingang (EB) für die im Zweipegel-Binärcode vorliegenden umzuformenden Signale vorgesehen ist, daß mit diesem Eingang der D-Eingang eines ersten D-Flipflop verbunden ist, daß ein Takteingang (ET) vorgesehen ist, an den die Takteingänge des ersten D-Flipflop (DF1), eines zweiten D-Flipflops (DF2) und einer Teilerstufe (T) angeschlossen sind, daß der nichtinvertierende Ausgang (Q) des ersten D-Flipflops (DF1) mit einem ersten Eingang eines ersten UND-Gatters (U1) verbunden ist, daß der invertierende Ausgang (Q̄) des ersten D-Flipflops (DF1) mit dem D-Eingang des zweiten D-Flipflops (DF2) sowie mit dem ersten Eingang eines zweiten UND-Gatters (U2) verbunden ist, daß an den nichtinvertierenden Ausgang (Q) des zweiten D-Flipflops (DF2) der erste Eingang eines ersten NOR-Gatters (NOR1) angeschlossen ist, daß mit dem invertierenden Ausgang (Q̄) der Teilerstufe (T) zweite Eingänge des ersten UND-Gatters (U1) und des ersten NOR-Gatters (NOR1) verbunden sind, daß mit dem nichtinvertierenden Ausgang (Q) der Teilerstufe (T) zweite Eingänge des zweiten UND-Gatters (U2) und eines zweiten NOR-Gatters (NOR2) verbunden sind, daß ein erster Eingang des zweiten NOR-Gatters (NOR2) mit dem Binäreingang (EB) verbunden ist, daß die Ausgänge des ersten UND-Gatters (U1) und des ersten NOR-Gatters (NOR1) jeweils getrennt mit Eingängen eines dritten UND-Gatters (U3) verbunden sind, daß Ausgänge des zweiten UND-Gatters (U2) und des zweiten NOR- Gatters (NOR2) jeweils getrennt mit Eingängen eines vierten UND-Gatters (U4) verbunden sind, daß die Ausgänge des dritten und des vierten UND-Gatters (U3, U4) jeweils getrennt mit Eingängen einer Subtrahierschaltung (SUB) verbunden sind, daß der Ausgang der Subtrahierschaltung den Ausgang (A) des Decodierers bildet und daß ein Synchronisiereingang (ES) vorgesehen ist, an den ein Rücksetzeingang
der Teilerstufe (T) angeschlossen ist.

2. Decodierer nach Patentanspruch 1, d a d u r c h   g e -
k e n n z e i c h n e t , daß ein erstes Synchronisier-UND-
Gatter (SU1) vorgesehen ist, dessen erster nichtinvertierender Eingang mit dem nichtinvertierenden Ausgang (Q) der
Teilerstufe (T) verbunden ist, daß an den Takteingang (ET)
ein invertierender Eingang des ersten Synchronisier-UND-
Gatters (SU1) angeschlossen ist und ein zweiter nichtinvertierender Eingang an den invertierenden Ausgang (Q̄) des
zweiten D-Flipflops sowie ein dritter nichtinvertierender
Eingang an den Binäreingang (EB) angeschlossen sind und
daß ein invertierender Ausgang des ersten Synchroniser-
UND-Gatters (SU1) mit dem Rücksetzeingang der Teilerstufe
(T) verbunden ist.

3. Decoder nach Patentanspruch 2, d a d u r c h   g e -
k e n n z e i c h n e t , daß das erste Synchronisier-UND-
Gatter (SU1) einen nichtinvertierenden Ausgang aufweist, an
den der erste Eingang eines NAND-Gatters (NU) sowie ein Signaleingang eines Integrators (SI) angeschlossen sind, daß
der Ausgang des Integrators mit dem zweiten Eingang des
NAND-Gatters verbunden ist, daß die Verbindung zwischen invertierendem Ausgang des ersten Synchronisier-UND-Gatters
(SU1) und Rücksetzeingang der Teilerstufe (T) aufgetrennt
ist und mit diesem Rücksetzeingang der Ausgang des NAND-
Gatters (NU) verbunden ist.

4. Decoder nach Patentanspruch 3, d a d u r c h   g e -
k e n n z e i c h n e t , daß mit dem ersten nichtinvertierenden Eingang des ersten Synchronisier-UND-Gatters ein
invertierender Eingang eines zweiten Synchronisier-UND-
Gatters (SU2) verbunden ist, daß mit dem zweiten und dem
dritten nichtinvertierenden Eingang des ersten Synchronisier-UND-Gatters (SU1) ein erster und ein zweiter nichtinvertierender Eingang des zweiten Synchronisier-UND-Gatters (SU2) verbunden sind und daß dessen Ausgang mit einem Setzeingang des Integrators (SI) verbunden ist.

5. Decoder nach einem der vorhergehenden Patentansprüche, d a d u r c h   g e k e n n z e i c h n e t , daß der Decoder einem Regenerator für die im Zweipegel-HDB3-Code vorliegenden digitalen Signalen nachgeschaltet ist.

0140043

# FIG 1

# FIG 2